# EUROPEAN PATENT SPECIFICATION

(11) **EP 2 960 746 B1**
(45) Date of publication and mention of the grant of the patent: **27.12.2017**
(21) Application number: 14173886.4
(22) Date of filing: 25.06.2014
(51) Int. Cl.: G05G 9/047, A62C 27/00, E06C 5/32, E06C 5/04

(54) **Control system and method for controlling the movement of an aerial apparatus**
Steuersystem und Verfahren zur Steuerung der Bewegung einer Antennenvorrichtung
Système et procédé de commande du mouvement d'un appareil aérien

(43) Date of publication of application: 30.12.2015
(73) Proprietor: IVECO MAGIRUS AG, 89079 Ulm (DE)
(72) Inventor: Karremann, Martin, 88483 Burgrieden (DE)
(74) Representative: Franzolin, Luigi

(56) References cited:
- EP-A1- 2 199 530
- US-A- 5 724 068
- US-A- 6 020 875
- US-A- 6 166 723
- US-A1- 2007 185 625
- US-B2- 8 264 458

## Description

The present invention relates to a control system and a method for controlling the movement of an aerial apparatus, in particular for controlling a turnable ladder of firefighting vehicle.

Aerial apparatuses such as turnable ladders of firefighting vehicles are controlled by an operator from a position giving him an overview of the space in which the aerial apparatus is moved. For reason of simplicity the further description will refer to turnable ladders as one example of aerial apparatuses, although this example is not to be understood as limiting in the sense of the present invention. As it is commonly known, such turnable ladders can be turned around a vertical axis and also extracted, as well as lowered or lifted, to reach remote positions in rescue situations. It is very important to reach this remote points as fast as possible so that no time needed for the rescue of persons, etc. is lost. On the other hand, the movement speed of the turnable ladder is limited by construction parameters and also depending on its present position, especially its extension range. All these parameters cannot be overviewed by the operator in the rescue situation.

A common control station of a turnable ladder is generally provided with a manually operable input device, such as a control lever or joystick, which is deflectable in at least one spatial direction by a deflecting force applied by the operator. For example, a joystick allows to input direction and moving speed of a turnable ladder. A processing unit converts the amount of deflection of the input device into a corresponding speed signal, which is transferred to an actuating unit for moving the aerial apparatus with a speed corresponding to the speed signal.

To assist the operator in controlling the turnable ladder, systems are known with comprise sensors, for example, distance sensors at the end of the ladder to generate a warning signal to avoid a collision with an object. Other kinds of sensors protect against overloading. However, the generation of warning signals or the execution of a forced shut down of the system is only an incomplete assisting function to control the movement of the ladder. In particular there is a desire to control the ladder at maximum moving speed depending on the present situation. However, even in the presents of sensors that generate warning signals or prevent the ladder from a collision or overload, the control of the ladder still demands a control of a experienced operator and much skill to be operated in difficult situation, for example, at maximum range in a narrow space.

It is therefore an object of the present invention to provide a control system for controlling the movement of an aerial apparatus like a turnable ladder of a firefighting vehicle that provides a more direct feedback to the operator to simplify the control depending on the present system status.

Another object is the provision of a corresponding method for controlling the movement of an aerial apparatus.

These objects are achieved by a control system comprising the features of claim 1, and a corresponding method comprising the features of claim 6.

The control system according to the present invention comprises determining means for determining a possible maximum speed for moving the aerial apparatus. The deflection of the input device is counteracted or limited by a restricting means according to determined possible maximum speed.

By this counteracting or limiting action the operator at the input device gets an immediate and intuitive haptic feedback when he applies a manual deflecting force to the input device.

For example, according to the actually determined possible maximum speed, the range of deflection of input device is limited so that a further deflection is not possible. For example, a joystick or operation lever used as an input device is restricted in its freedom of movement by the restricting means within a certain range, depending on the determined possible maximum speed. Because the determination of the maximum speed can be updated in real time, depending on the present status of the aerial apparatus, the counteraction or limitation of the deflection of the input device can be adapted dynamically. Such a haptic feedback system provides advantages over a relatively simple system that generates warning signals or just initiates an immediate shut down of the ladder movement in a case of collision danger.

According to an preferred embodiment of the present invention, the restricting means is providing to apply a restoring force according to the determined possible maximum speed to the input device acting to restore the input device against the deflecting force. This restoring force acts to set back the input device to a position corresponding to a lower speed than the possible maximum speed, and with no manual deflecting force applied, the restoring force will put the input device back into a neutral position. There are several possibilities to apply the restoring force. For example, a very strong restoring force can be applied immediately if the possible maximum speed (or a speed value just lower than the possible maximum speed) is reached, so that this strong restoring force cannot be overcome manually by the operator. According to another example, the restoring force increases gradually when the deflection of the input device approaches a limit corresponding to the possible maximum speed. This gives a more intuitive haptic feedback to the operator, enabling him to sense the approach to the maximum speed limit.

According to one preferred embodiment of the present invention, the input device is a joystick.

More preferably, the determining means comprise at least one of the following: Speed sensors, acceleration sensors, load sensors, deflection sensors, and distance sensors for determining the distance to an object.

According to another preferred embodiment of the invention, the determining means is provided to determine a possible maximum speed on the basis of measured sensor data and predetermined data related to construction parameters of the aerial apparatus to be controlled.

The invention further relates to a method for controlling the movement of an aerial apparatus, in particular for controlling a turnable ladder of firefighting vehicle, wherein a manually operable input device is deflected in at least one spatial direction by a deflecting force, the amount of deflection of the input device is converted into a corresponding speed signal, and the aerial apparatus is moved with a speed corresponding to the speed signal, wherein the possible maximum speed is determined, and the deflection of the input device is counteracted or limited according to the determined possible maximum speed.

Preferably a restoring force according to the determined possible maximum speed is applied to the input device acting to restore the input device against the deflecting force. According to another preferred embodiment of the method according to the present invention, a possible maximum speed is determined on the basis of measured sensor data and predetermined data related to construction parameters of the aerial apparatus to be controlled.

These and other aspects from the invention will be apparent from and elucidated with reference to a preferred embodiment of the invention described hereinafter.

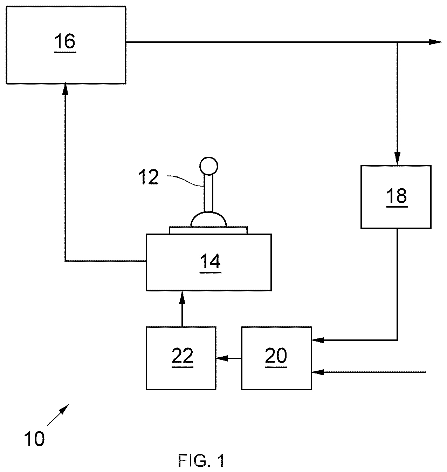

The only figure 1 is a schematic view of the layout of an embodiment of a control system for controlling the movement of an aerial apparatus according to the present invention.

The control system 10 shown in the figure is provided for controlling a turnable ladder of a firefighting vehicle as one example of an aerial apparatus. It is noted that the control system according to the present invention is not restricted to the control of such turnable ladders but is applicable also to other kinds of aerial apparatuses. The control system 10 comprises a joystick 12 as one embodiment of an input device which is manually operable. As commonly known, the joystick 12 is deflectable in different spatial directions (e.g., up, down, left and right) by a deflection force that can be applied manually by an operator (not shown). Thus, the joystick, which is shown in a neutral central position can be deflected by tilting it sidewards. This tilting movement comprises a direction component, defined by the direction into which the joystick 12 is deflected, and an absolute value corresponding to the amount of deflection, corresponding to an intended speed of movement into the given direction. The amount of deflection of the joystick 12 is converted into a corresponding speed signal by means of processing unit 14, which senses the direction of deflection of the joystick 12 as well as the amount of its deflection and converts it into a corresponding electric speed signal, which is output by the processing unit 14 and input into an actuating unit for moving the turnable ladder with a speed corresponding to the present speed signal. For example, the actuating unit 16 is a hydraulic unit that outputs a hydraulic pressure for moving the turnable ladder into the given direction with a speed given by the corresponding speed signal. The actuating unit 16 can also comprise electric motors or other kinds of actuators or driving units.

By the arrangement described above, the amount of deflection of the input device is turned into a corresponding movement of the turnable ladder with a speed determined by the deflection of the input device.

To each aerial apparatus, like a turnable ladder in the present embodiment, there are certain restrictions for a speed of movement, depending on different parameters, like the extension range of the turnable ladder, the present acceleration at different points, the mechanical load, for example, the weight measured at the tip of the ladder, bending forces acting on the ladder, etc. One further speed limiting factor may also be the distance of the ladder to an external object. For example, it could be determined to move the ladder slowly near an object, to prevent the danger of a collision of the ladder with the object.

To determine the possible maximum speed for the movement of the ladder, determining means are provided that comprise sensors 18, like speed sensors, acceleration sensors, weight sensors, load sensors and/or distance sensors for determining a distance to an object. The determining means may further comprise a calculation unit 20 for calculating a possible maximum speed from the sensor data measured by the sensors 18 and/or by other predetermined data related to construction parameters of the turnable ladder to be controlled.

The control system 10 further comprises restricting means 22 for counteracting the deflection of the joystick 12 according to the possible maximum speed determining by the determining means 18, 20. In the present embodiment, this counteraction is provided by applying a restoring force according to the determined possible maximum speed to the joystick 12. This restoring force acts to restore the joystick 12 against the deflecting force applied manually by the operator. By the application of the restoring force, the joystick 12 is forced back into its neutral position to decrease the amount of its deflection and the lower the speed set by the joystick 12. The restoring force gives a haptic feedback to the operator, because the operation of the joystick 12 is only possible against the restoring force applied by the restriction means 22. For this purpose, the restriction means 22 may comprise motors or any other driving means to apply the restoring force. The force applied by these motors or driving means is set according to determined possible maximum speed, as described before.

In the present control system 10, there is a direct feedback informing the operator about the present speed situation of the turnable ladder, because the possible maximum speed is determined in real time and for the present operation situation and he is informed immediately at any point of time about the possible maximum speed. Exceeding the present possible maximum speed can be prevented effectively by applying a restoring force that is high enough. This direct feedback effect can also be described as a "force feedback". According to a different embodiment of the present invention, the restricting means 22 is provided to limit the deflection of the input device according to the determined possible maximum speed. In this embodiment the input device, like a joystick 12, can be moved within certain limits freely and without the application of any restoring force. However, the limits of this movement are set according to the possible maximum speed that has been determined by the determining means 18, 20 on the basis of the sensor data and predetermined data related to construction parameters of the aerial apparatus to be controlled. According to the present situation of the aerial apparatus, the limits of the movement of the input device can be adapted dynamically in real time corresponding to the present possible maximum speed.

In the control system 10 of this embodiment, the joystick 12 as one example of a manually operable input device is deflected in at least one spatial direction by a deflection force applied by an operator, and the amount of deflection of the input device is converted into a corresponding speed signal. The turnable ladder is one example of the aerial apparatus is moved with a speed corresponding to the speed signal. During operation, a possible maximum speed of movement of the aerial apparatus is determined, and the deflection of the input device is counteracted or limited according to determined possible maximum speed.

In the present embodiment the restoring force according to the determined possible maximum speed is applied to the joystick 12 acting to restore the joystick 12 against the deflecting force applied by the operator. The possible maximum speed can be determined on the basis of measured sensor data and predetermined data related to construction parameters of the aerial apparatus to be controlled.

This invention can be implemented advantageously in a computer program comprising program code means for performing one or more steps of such method, when such program is run on a computer. For this reason the patent shall also cover such computer program and the computer-readable medium comprising the program code means for performing one or more steps of such method, when such program is run on a computer.

Many changes, modification, variation and other uses and applications of the subject invention will become apparent to those skilled in the art after considering the specification and the accompanying drawings which disclose preferred embodiments thereof. All such changes, modification, variations and other uses and application which do not depart from the scope of the invention are deemed to be covered by this invention.

Further implementation details will not be described, as the man skilled in the art is able to carry out the invention starting from the teaching of the above description.

## Claims

1. Control system (10) for controlling the movement of an aerial apparatus, in particular for controlling a turnable ladder of a firefighting vehicle, comprising a manually operable input device that is deflectable in at least one spatial direction by a deflecting force, an processing unit (14) for converting the amount of deflection of the input device into a corresponding speed signal and an actuating unit (16) for moving the aerial apparatus with a speed corresponding to the speed signal, **characterized by** determining means (18,20) for determining a possible maximum speed and restricting means (22) for counteracting or limiting the deflection of the input device according to the determined possible maximum speed.

2. Control system according to claim 1, **characterized in that** the restricting means is provided to apply a restoring force according to the determined possible maximum speed to the input device acting to restore the input device against the deflecting force.

3. Control system according to claim 1 or 2, **characterized in that** the input device is a joystick (12).

4. Control system according to one of claims 1 to 3, **characterized in that** the determining means (18) comprise at least one of the following: speed sensors, acceleration sensors, load sensors, deflection sensors, and distance sensors for determining a distance to an object.

5. Control system according to claim 4, **characterized in that** the determining means (18, 20) is provided for determining a possible maximum speed on the basis of measured sensor data and predetermined data related to construction parameters of the aerial apparatus to be controlled.

6. Method for controlling the movement of an aerial apparatus, in particular for controlling a turnable ladder of a firefighting vehicle, wherein a manually operable input device is deflected in at least one spatial direction by a deflecting force, the amount of deflection of the input device is converted into a corresponding speed signal, and the aerial apparatus is moved with a speed corresponding to the speed signal, **characterized in that** a possible maximum speed is determined, and the deflection of the input device is counteracted or limited according to the determined possible maximum speed.

7. Method according to claim 6, **characterized in that** a restoring force according to the determined possible maximum speed is applied to the input device acting to restore the input device against the deflecting force.

8. Method according to claim 7, **characterized in that** a possible maximum speed is determined on the basis of measured sensor data and predetermined data related to construction parameters of the aerial apparatus to be controlled.

9. Computer program comprising computer program code means adapted to perform all the steps of one of claims 6 - 8, when said program is run on a computer.

10. A computer readable medium having a program recorded thereon, said computer readable medium comprising computer program code means adapted to perform all the steps of one of claims 6 - 8, when said program is run on a computer.

## Patentansprüche

1. Steuersystem (10) zur Steuerung der Bewegung eines Hubgerätes, insbesondere zur Steuerung einer Drehleiter eines Feuerwehrfahrzeugs, umfassend eine manuell bedienbare Eingabevorrichtung, welche in zumindest einer Raumrichtung durch eine Neigekraft neigbar ist, eine Verarbeitungseinheit (14) zur Umwandlung des Betrags der Neigung der Eingabevorrichtung in ein entsprechendes Geschwindigkeitssignal, und eine Betätigungseinheit (16) zur Bewegung des Hubgerätes mit einer Geschwindigkeit entsprechend dem Geschwindigkeitssignal, **gekennzeichnet durch** Bestimmungsmittel (18,20) zur Bestimmung einer maximal möglichen Maximalgeschwindigkeit und Begrenzungsmittel (22) zur Gegenwirkung oder Begrenzung der Neigung der Eingabevorrichtung entsprechend der bestimmten möglichen Maximalgeschwindigkeit.

2. Steuersystem gemäß Anspruch 1, **dadurch gekennzeichnet, dass** die Begrenzungsmittel dazu vorgesehen sind, eine Rückstellkraft entsprechend der bestimmten möglichen Maximalgeschwindigkeit auf die Eingabevorrichtung auszuüben, welche zur Rückstellung der Eingabevorrichtung gegen die Neigekraft wirkt.

3. Steuersystem gemäß Anspruch 1 oder 2, **dadurch gekennzeichnet, dass** die Eingabevorrichtung ein Joystick (12) ist.

4. Steuersystem gemäß einem der Ansprüche 1 bis 3, **dadurch gekennzeichnet, dass** die Bestimmungsmittel (18) zumindest eines der folgenden Mittel umfassen:
Geschwindigkeitssensoren, Beschleunigungssensoren, Lastsensoren, Neigungssensoren und Abstandssensoren zur Bestimmung eines Abstands zu einem Objekt.

5. Steuersystem gemäß Anspruch 4, **dadurch gekennzeichnet, dass** die Bestimmungsmittel (18,20) vorgesehen sind zur Bestimmung einer möglichen Maximalgeschwindigkeit auf der Basis gemessener Sensordaten und vorbestimmter Daten bezüglich Konstruktionsparametern des zu steuernden Hubgerätes.

6. Verfahren zur Steuerung der Bewegung eines Hubgerätes, insbesondere zur Steuerung einer Drehleiter eines Feuerwehrfahrzeugs, bei welchem eine manuell bedienbare Eingabevorrichtung in zumindest einer Raumrichtung durch eine Neigekraft geneigt wird, wobei der Betrag der Neigung der Eingabevorrichtung in ein entsprechendes Geschwindigkeitssignal umgewandelt wird, und das Hubgerät mit einer Geschwindigkeit entsprechend dem Geschwindigkeitssignal bewegt wird, **dadurch gekennzeichnet, dass** eine mögliche Maximalgeschwindigkeit bestimmt wird und der Neigung der Eingabevorrichtung entgegengewirkt oder diese begrenzt wird entsprechend der bestimmten möglichen Maximalgeschwindigkeit.

7. Verfahren gemäß Anspruch 6, **dadurch gekennzeichnet, dass** eine Rückstellkraft entsprechend der bestimmten möglichen Maximalgeschwindigkeit auf die Eingabevorrichtung ausgeübt wird, welche Zurückstellung der Eingabevorrichtung gegen die Neigekraft wirkt.

8. Verfahren gemäß Anspruch 7, **dadurch gekennzeichnet, dass** eine mögliche Maximalgeschwindigkeit auf der Basis gemessener Sensordaten und vorbestimmter Daten bezüglich Konstruktionsparametern des zu steuernden Hubgerätes bestimmt wird.

9. Computerprogramm, umfassend Computerprogramm-Codemittel zur Durchführung aller Schritte aus einem der Ansprüche 6 bis 8, wenn dieses Programm auf einem Computer ausgeführt wird.

10. Computerlesbares Medium, mit einem darauf gespeicherten Programm, welches computerlesbare Medium Computerprogramm-Codemittel zur Durchführung aller Schritte aus einem der Ansprüche 6 bis 8 umfasst, wenn das Programm auf einem Computer ausgeführt wird.

## Revendications

1. Système de commande (10) pour commander le déplacement d'un appareil aérien, en particulier pour commander une échelle rotative d'un véhicule de lutte contre les incendies, comprenant un dispositif d'entrée pouvant être actionné manuellement qui peut être défléchi dans au moins une direction spatiale par une force de déflexion, une unité de traitement (14) pour convertir la quantité de déflexion du dispositif d'entrée en un signal de vitesse correspondant et une unité d'actionnement (16) pour déplacer l'appareil aérien avec une vitesse correspondant au signal de vitesse, **caractérisé par** des moyens de détermination (18, 20) pour déterminer une vitesse maximum possible et des moyens de limitation (22) pour contrebalancer ou limiter la déflexion du dispositif d'entrée conformément à la vitesse maximum possible déterminée.

2. Système de commande selon la revendication 1, **caractérisé en ce que** les moyens de limitation sont prévus pour appliquer une force de rappel conformément à la vitesse maximum possible déterminée au dispositif d'entrée agissant pour rétablir le dispositif d'entrée contre la force de déflexion.

3. Système de commande selon la revendication 1 ou 2, **caractérisé en ce que** le dispositif d'entrée est une manette de commande (12).

4. Système de commande selon l'une des revendications 1 à 3, **caractérisé en ce que** les moyens de détermination (18) comprennent au moins l'un des éléments suivants : des capteurs de vitesse, des capteurs d'accélération, des capteurs de charge, des capteurs de déflexion et des capteurs de distance pour déterminer une distance jusqu'à un objet.

5. Système de commande selon la revendication 4, **caractérisé en ce que** les moyens de détermination (18, 20) sont prévus pour déterminer une vitesse maximum possible sur la base de données de capteur mesurées et de données prédéterminées relatives à des paramètres de construction de l'appareil aérien à commander.

6. Procédé pour commander le déplacement d'un appareil aérien, en particulier pour commander une échelle rotative d'un véhicule de lutte contre les incendies, dans lequel un dispositif d'entrée pouvant être actionné manuellement est défléchi dans au moins une direction spatiale par une force de déflexion, la quantité de déflexion du dispositif d'entrée est convertie en un signal de vitesse correspondant, et l'appareil aérien est déplacé avec une vitesse correspondant au signal de vitesse, **caractérisé en ce qu'**une vitesse maximum possible est déterminée, et la déflexion du dispositif d'entrée est contrebalancée ou limitée conformément à la vitesse maximum possible déterminée.

7. Procédé selon la revendication 6, **caractérisé en ce qu'**une force de rappel conformément à la vitesse maximum possible déterminée est appliquée au dispositif d'entrée agissant pour rétablir le dispositif d'entrée contre la force de déflexion.

8. Procédé selon la revendication 7, **caractérisé en ce qu'**une vitesse maximum possible est déterminée sur la base de données de capteur mesurées et de données prédéterminées relatives à des paramètres de construction de l'appareil aérien à commander.

9. Programme d'ordinateur comprenant des moyens formant code de programme d'ordinateur conçus pour effectuer toutes les étapes de l'une des revendications 6 à 8, lorsque ledit programme est exécuté sur un ordinateur.

10. Support pouvant être lu par un ordinateur sur lequel un programme est enregistré, ledit support pouvant être lu par un ordinateur comprenant des moyens formant code de programme d'ordinateur conçus pour effectuer toutes les étapes de l'une des revendications 6 à 8, lorsque ledit programme est exécuté sur un ordinateur.
